# EUROPEAN PATENT APPLICATION

(11) **EP 3 339 265 A1**
(43) Date of publication of application: **27.06.2018**
(21) Application number: 18153122.9
(22) Date of filing: 30.09.2010
(51) Int. Cl.: C03C 21/00, G06F 3/041

(54) **STRENGTHENED GLASS COVERS FOR PORTABLE ELECTRONIC DEVICES**

(30) Priority: 30.09.2009 US 247493 P
(62) Divisional of application: 10765710.8
(71) Applicant: Apple Inc., Cupertino, CA 95014 (US)
(72) Inventor: PREST, Christopher, San Francisco, CA California 94114 (US); ZADESKY, Stephen Paul, Portola Valley, CA California 94028 (US)
(74) Representative: Mears, Andrew David

(57) **Abstract**

Techniques for improving strength of a thin glass cover for an electronic device are disclosed. The glass member can have improved strength by chemical strengthening in a series of stages. The stages can, for example, have a first ion exchange stage where larger ions are exchanged into the glass cover, and a second ion exchange stage where some of the larger ions are exchanged out from the glass cover. The glass cover can improve its strength by forming its edges with a predetermined geometry. Advantageously, the glass cover can be not only thin but also adequately strong to limit susceptibility to damage. The glass member pertains to a glass cover for a housing for an electronic device. The glass cover can be provided over or integrated with a display, such as a Liquid Crystal Display (LCD) display.

## Description

### CROSS-REFERENCE TO OTHER APPLICATIONS

This application claims priority of U.S. Provisional Patent Application No. 61/247,493, filed September 30, 2009 and entitled "Techniques for Strengthening Glass Covers for Portable Electronic Devices", which is herein incorporated by reference.

This application is related to International Application No, PCT/US2010/025979, filed March 2, 2010 and entitled "Techniques for Strengthening Glass Covers for Portable Electronic Devices", which hereby incorporated herein by reference in its entirety.

### BACKGROUND OF THE INVENTION

Conventionally, small form factor devices, such as handheld electronic devices, have a display arrangement that includes various layers. The various layers usually include at least a display technology layer, and may additionally include a sensing arrangement and/or a cover window disposed over the display technology layer. By way of example, the display technology layer may include or pertain to a Liquid Crystal Display (LCD) that includes a Liquid Crystal Module (LCM). The LCM generally includes an upper glass sheet and a lower glass sheet that sandwich a liquid crystal layer therebetween. The sensing arrangement may be a touch sensing arrangement such as those used to create a touch screen. For example, a capacitive sensing touch screen can include substantially transparent sensing points or nodes dispersed about a sheet of glass (or plastic). In addition, the cover window, which is typically designed as the outer protective barrier of the layer stack.

The cover window, or glass cover, for a small form factor device can be made of plastic or glass. Plastic is durable but susceptible to being scratched. Glass is scratch resistant, but brittle. In general, the thicker the glass, the stronger it is. Unfortunately, however, the glass cover is often relatively thin, and may be a relatively weak component of the device structure especially at its edges. For example, the glass cover may be susceptible to damage when the portable electronic device is stressed in an abusive manner. Chemically strengthening has been used to strengthen glass. While this has generally worked well, there is a continuing need to provide ways to strengthen the glass covers.

### SUMMARY

The invention relates generally to increasing the strength of glass. The glass having increased strength can be thin yet be sufficiently strong to be suitable for use in electronic devices, such as portable electronic devices.

Embodiment of the invention can relate to apparatus, systems and methods for improving strength of a thin glass cover for an electronic device. In one embodiment, a glass cover can be strengthened by chemical strengthening in a series of stages. The stages can, for example, have a first ion exchange stage where larger ions are exchanged into the glass cover, and a second ion exchange stage where some of the larger ions are exchanged out from the glass cover. Optionally, in one embodiment, the glass cover can improve its strength by forming its edges with a predetermined geometry. Advantageously, the glass cover can be not only thin but also adequately strong to limit susceptibility to damage.

In one example, the glass member may be an outer surface of an electronic device. The glass member may for example correspond to a glass cover that helps form part of a display area of an electronic device (e.g., situated in front of a display either as a separate part or integrated within the display). Alternatively or additionally, the glass member may form a part of the housing. For example, it may form an outer surface other than in the display area.

The apparatus, systems and methods for improving strength of thin glass are especially suitable for glass covers, or displays (e.g., LCD displays), assembled in small form factor electronic devices such as handheld electronic devices (e.g., mobile phones, media players, personal digital assistants, remote controls, etc.). The apparatus, systems and methods can also be used for glass covers or displays for other relatively larger form factor electronic devices (e.g., portable computers, tablet computers, displays, monitors, televisions, etc.). The glass can be thin in these various embodiments, such as less than 5 mm or more particularly between 0.5 and 3 mm. In particularly thin embodiments, the thickness of the glass can be between 0.3 and 1 mm.

The invention can be implemented in numerous ways, including as a method, system, device, or apparatus. Several embodiments of the invention are discussed below.

As a method for producing a cover for an exposed surface of a consumer electronic product, one embodiment of the invention can, for example, include at least obtaining a glass cover for the exposed surface of the consumer electronic product, and then chemically strengthening the glass cover using a series of ion exchange stages.

As a method for producing a glass cover for an exposed surface of a consumer electronic product, one embodiment of the invention can, for example, include the acts of: obtaining a glass sheet; singulating the glass sheet into a plurality of glass covers, each of the glass covers being suitably sized to be provided on the exposed surface of a consumer electronic product; and chemically strengthening the glass covers by (i) placing the glass covers in a first heated solution for a first period of time to allow at least one component of the first heated solution to diffuse into the glass covers, and (ii) placing the glass covers in a second heated solution for a second period of time after removing the glass covers from the first heated solution.

As a consumer electronic product, one embodiment of the invention can, for example, includes at least: a housing having a front surface, a back surface and side surfaces; electrical components provided at least partially internal to the housing, the electrical components including at least a controller, a memory, and a display, the display being provided at or adjacent the front surface of the housing; and a cover glass provided at or over the front surface of the housing such that it is provided over the display, the cover glass being strengthened chemically strengthening using a series of ion exchange stages.

Other aspects and advantages of the invention will become apparent from the following detailed description taken in conjunction with the accompanying drawings which illustrate, by way of example, the principles of the invention.

### Brief Description of the Drawings

The invention will be readily understood by the following detailed description in conjunction with the accompanying drawings, wherein like reference numerals designate like structural elements, and in which:
FIG. 1A is a perspective diagram of a glass member in accordance with one embodiment.
FIG. 1B is a simplified diagram of an electronic device in accordance with one embodiment.
FIG. 2 is a flow diagram of glass cover process according to one embodiment.
FIGs. 3A-3E are cross-sectional diagrams of glass covers for electronic device housings according to various embodiments.
FIG. 4A is a cross-sectional diagram of a glass cover for electronic device housings according to another embodiment.
FIG. 4B is a cross-sectional diagram of a glass cover for electronic device housings according to a reference embodiment.
FIG. 5A is a cross-sectional diagram of a glass cover for an electronic device housing being manipulated according to one embodiment.
FIG. 5B is a cross-sectional diagram of a glass cover for an electronic device housing being manipulated according to another embodiment.
FIGs. 6A and 6B are a diagrammatic representation of an electronic device according to one embodiment.
FIGs. 7A and 7B are a diagrammatic representation of an electronic device according to another embodiment.
FIG. 8 is flow diagram which illustrates a method of chemically strengthening glass, e.g., a glass cover, according to one embodiment.
FIG. 9A is a cross-sectional diagram of a glass cover which has been chemically treated according to one embodiment.
FIG. 9B is a cross-sectional diagram of a glass cover which has been chemically treated, as shown to include a chemically treated portion in which potassium ions have been implanted according to one embodiment.
FIG. 10A is a diagrammatic representation of a chemical treatment process that involves submerging a glass cover in an ion bath according to one embodiment.
FIG. 10B is a diagrammatic representation of a chemical treatment process that involves submerging a glass cover in a sodium bath according to one embodiment.
FIG. 11 is an illustration of an exemplary graphical plot of stress reduction at surface of glass according to one embodiment.
FIGs. 12A-12D illustrate exemplary diagrams of compressive stress profiles for glass members proximate to at an edge.
FIG. 13 illustrates an exemplary diagram of flexural strength for glass members having different edge profiles.

### DETAILED DESCRIPTION OF EMBODIMENTS OF THE INVENTION

The invention relates generally to increasing the strength of glass. The glass having increased strength can be thin yet be sufficiently strong to be suitable for use in electronic devices, such as portable electronic devices.

The following detailed description is illustrative only, and is not intended to be in any way limiting. Other embodiments will readily suggest themselves to skilled persons having the benefit of this disclosure. Reference will now be made in detail to implementations as illustrated in the accompanying drawings. The same reference indicators will generally be used throughout the drawings and the following detailed description to refer to the same or like parts. It should be appreciated that the drawings are generally not drawn to scale, and at least some features of the drawings have been exaggerated for ease of illustration.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application and business related constraints, and that these specific goals will vary from one implementation to another and from one developer to another. Moreover, it will be appreciated that such a development effort might be complex and time-consuming, but would nevertheless be a routine undertaking of engineering for those of ordinary skill in the art having the benefit of this disclosure.

The invention is related to apparatus, systems and methods for improving strength of a thin glass cover for an electronic device. In one embodiment, a glass cover can be strengthened by chemical strengthening in a series of stages. The stages can, for example, have a first ion exchange stage where larger ions are exchanged into the glass cover, and a second ion exchange stage where some of the larger ions are exchanged out from the glass cover. Optionally, in one embodiment, the glass cover can improve its strength by forming its edges with a predetermined geometry. Advantageously, the glass cover can be not only thin but also adequately strong to limit susceptibility to damage.

In one example, the glass member may be an outer surface of an electronic device. The glass member may for example correspond to a glass cover that helps form part of a display area of an electronic device (e.g., situated in front of a display either as a separate part or integrated within the display). Alternatively or additionally, the glass member may form a part of the housing. For example, it may form an outer surface other than in the display area.

The apparatus, systems and methods for improving strength of thin glass are especially suitable for glass covers, or displays (e.g., LCD displays), assembled in small form factor electronic devices such as handheld electronic devices (e.g., mobile phones, media players, personal digital assistants, remote controls, etc.). The apparatus, systems and methods can also be used for glass covers or displays for other relatively larger form factor electronic devices (e.g., portable computers, tablet computers, displays, monitors, televisions, etc.). The glass can be thin in these various embodiments, such as less than 5 mm or more particularly between 0.5 and 3 mm. In particularly thin embodiments, the thickness of the glass can be between 0.3 and 1 mm.

In one embodiment, forming of the edges to correspond to a particular predetermined geometry and providing chemical strengthening can cause compression in the vicinity of the edges of the glass cover to be enhanced. The glass cover can thereby be made stronger by imposing the particular predetermined geometry to the edges of the glass cover. In one embodiment, surfaces, e.g., edges, of the glass cover can be chemically strengthened. In one embodiment, the edge geometry is configured to reduce or smooth out sharp transitions, such as corners. In one embodiment, the edge geometry can yield a smoothed corner, where for example a corner between a first surface and a second surface such as for example top/bottom surface and a side surface that is substantially perpendicular can be rendered less sharp. This may for example be accomplished by transitioning one surface to the other with a curve. By way of example, the corner can be rounded. For example, sharp edges, such as corners, can be desharpened or smoothed to create a more continuous transition from one surface to another. For example, an edge between a first surface (e.g., top or bottom surface) and a second surface (e.g., side surface) that might be perpendicular thereto can be desharpened. As another example, transition between a top surface to a side surface or between a bottom surface and a side surface can be desharpened or smoothed.

In one embodiment, a glass cover can extend to the edge of a housing of an electronic device without a protective bezel or other barrier. In one embodiment, the glass cover can include a bezel that surrounds its edges. In either cases, the edges are stronger by creating a specific edge geometry and/or chemical strengthening. The glass cover can be provided over or integrated with a display, such as a Liquid Crystal Display (LCD) display.

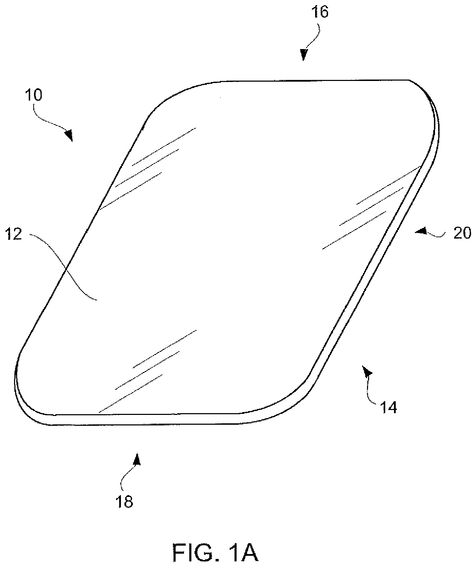

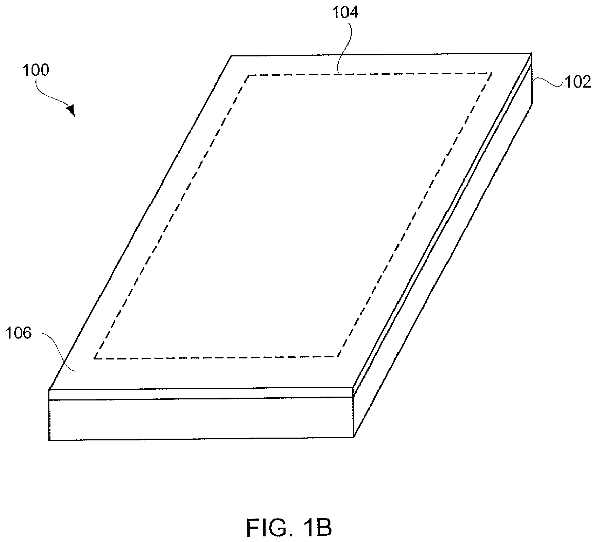

Embodiments are discussed below with reference to FIGs. 1-13. However, those skilled in the art will readily appreciate that the detailed description given herein with respect to these figures is for explanatory purposes as the invention extends beyond these limited embodiments.

FIG. 1A is a perspective diagram of glass member 10 in accordance with one embodiment. Glass member 10 is a thin sheet of glass. For example, the thickness of the glass in many applications is less or equal to 3 mm. The length, width or area for glass member 10 is dependent on the application. One application for glass member 10 is as a cover glass for a housing of an electronic device, such as a portable or handheld electronic device. As illustrated in FIG. 1A, glass member 10 can include front surface 12, back surface 14, top surface 16, bottom surface 18, and side surface 20. For enhanced strength, the edges or the sides (including top, bottom, left and right) are formed in accordance with a predetermined geometry. Using chemical strengthening, the predetermined geometry at the edges can increase the strength of glass member 10 at the edges. The surfaces of glass member 10 can also be chemically strengthened. The use of the predetermined geometry can render the edges more receptive to chemical strengthening because mechanical stress relaxation is reduced. Chemically strengthening can, for example, be performed on glass member 10 by placing glass member 10 in a chemical solution with which glass member 10 can interact, such as by ion exchange. As noted below, the predetermined geometry for the edges can provide smooth transitions (e.g., curved, rounded) in place of sharp transitions. In one embodiment, the glass member is a glass structure provided with or for a consumer electronic device. The glass member can be provided on an exterior or interior surface of the consumer electronic device. The glass structure can, in generally, be any part of the consumer electronic device that is made of glass. In one embodiment, the glass structure is at least a portion of a housing (e.g., outer surface) for the consumer electronic device.

FIG. 1B is a simplified diagram of electronic device 100 in accordance with one embodiment. Electronic device 100 may, for example, be embodied as portable or handheld electronic device having a thin form factor (or low profile). Electronic device 100 can, for example, correspond to a portable media player, a media storage device, a Portable Digital Assistant (PDA), a tablet PC, a computer, a mobile communication device (e.g., a cellular phone, a smart phone), a GPS unit, a remote control device, and the like. The electronic device 100 can be referred to as a consumer electronic device.

Electronic device 100 can include housing 102 that serves as the outer surface for electronic device 100. Electrical components (not shown) are disposed within housing 102. The electrical components can include a controller (or processor), memory, battery, and a display (e.g., LCD display). Display area 104 is disposed within housing 102 of electronic device 100. Electronic device 100 can include a full view or substantially full view display area 104 that consumes a majority if not all of the front surface of electronic device 100. Display area 104 may be embodied in a variety of ways. In one example, display area 104 consists of at least a display such as a flat panel display and more particularly an LCD display. Additionally, electronic device 100 has cover glass 106 provided over display area 104. Cover glass 106 server as an external surface, i.e., top surface, for electronic device 100. Cover glass 106 can be clear or transparent so that display area 104 can be viewed through cover glass 106. Cover glass 106 also resist scratching and therefore provide a substantially scratch-resistance surface for the top surface of housing 102 for electronic device 100.

Display area 104 may alternatively or additionally include a touch sensing device positioned over a display screen. For example, display area 104 may include one or more glass layers having capacitive sensing points distributed thereon. Each of these components can be separate layers or they may be integrated into one or more stacks. In one embodiment, cover glass 106 can act as the outer most layer of display area 104.

Any component of electronic 100 is susceptible to breakage if used in an abusive manner. For example, cover glass 106 can be a weak point of electronic device 100 in terms of strength against bending and damage if dropped. As a result, cover glass 106 can be susceptible to damage when electronic device 100 is stressed as for example in a drop event. By way of example, stress to cover glass 106 can result in damage, such as cracks or breaks. This problem is exacerbated in view of the continuing need to make things smaller and therefore thinner because thinner glass offers less strength.

Further, as shown in FIG. 1B, cover glass 106 can extend across the entire top surface of housing 102. In such a case, the edges of cover glass 106 are aligned, or substantially aligned, with the sides of housing 102. However, in other embodiments, the cover glass 106 need only be provided over a portion of a given surface of housing 102. In any case, given that the thickness of cover glass 106 is rather thin (i.e., less than a few millimeters), cover glass 106 can be cover glass 106 can be strengthened so as to reduce its susceptibility to damage.

First, the glass material for cover glass 106 can be selected from available glass that is stronger. For example, alumino silicate glass is one suitable choice for the glass material for cover glass 106. Other examples of glass materials include, but are not limited to including, soda lime, borosilicate, and the like.

Second, the glass material can be formed into an appropriate size, such as, for example, by singulating and/or machining. As an example, a sheet of the glass material can be cut into a plurality of individual cover glass pieces. The cover glass pieces can, for example, be suitably sized to fit on the top surface of housing 102 for electronic device 100.

In one embodiment, the edges of the cover glass pieces can be configured to correspond to a particular predetermined geometry. By forming (e.g., machining) the edges of the cover glass pieces to correspond to the particular predetermined geometry, the cover glass pieces become stronger and thus less susceptible to damage. Examples of suitable predetermined geometries for the edges (also known as edge geometries) of the cover glass pieces are discussed below. In one embodiment, the forming (e.g., machining) of the edges to correspond to a particular predetermined geometry can cause compressive stress at the edges to be more uniform. In other words, the compressive stress profile can be managed such that compressive minimum does not deviate much from the average compressive stress. Also, to the extent there is a minimum compressive stress, the predetermined geometry can serve to position the compressive minimum subsurface (i.e., slightly inward) from the edges. In one example, the edge geometry can include soft or gradual transitions from one surface to the other, as for example at interface between a first surface that is perpendicular to a second surface. Here, sharp corners or edges can be curved or otherwise smoothed such that they are less sharp. By rounding or smoothing the sharp corners or edges, as provided by the predetermined geometry, the cover glass pieces can become more receptive to more uniform chemical strengthening.

Third, the cover glass pieces can be chemically treated for further strengthening. One suitable chemical treatment is to place the cover glass pieces in a chemical bath containing Alkali metal (e.g., KNO₃) ions for a period of time (e.g., several hours) at an elevated temperature. The chemical treatment can desirably result in higher compression stresses at the surface of the cover glass pieces. The depth of the compressive layer being formed can vary with the characteristics of the glass used and the specific chemical treatment. For example, the depth of the compressive layer being formed can, in some embodiments, range from a depth of the compressive layer can be about 10 micrometers for soda lime glass to a depth of about 100 micrometers for alumino silicate glass. More generally, the depth of the compressive layer can be from 10-90 micrometers for soda lime glass or alumino silicate glass. However, it should be understood that the depth of the compressive layer can vary depending on specific chemical treatment applied to the glass.

The surface of the cover glass pieces includes the edges of the cover glass pieces. The higher compression stresses may be the result of ion exchange at or near the surface of the cover glass. The surface of the cover glass pieces includes the edges of the cover glass pieces. The higher compression stresses may be the result of K⁺ ions effectively replacing some Na⁺ ions at or near the surface of the cover glass.

Small form factor devices, such as handheld electronic devices, typically include a display region (e.g., display area 104) that includes various layers. The various layers may include at least a display, and may additionally include a sensing arrangement disposed over (or integrated with) the display. In some cases, the layers may be stacked and adjacent one another, and may even be laminated thereby forming a single unit. In other cases, at least some of the layers are spatially separated and not directly adjacent. For example, the sensing arrangement may be disposed above the display such that there is a gap therebetween. By way of example, the display may include a Liquid Crystal Display (LCD) that includes a Liquid Crystal Module (LCM). The LCM generally includes at least an upper glass sheet and a lower glass sheet that at least partially sandwich a liquid crystal layer therebetween. The sensing arrangement may be a touch sensing arrangement such as those used to create a touch screen. For example, a capacitive sensing touch screen can include substantially transparent sensing points or nodes dispersed about a sheet of glass (or plastic). A cover glass can serve as the outer protective barrier for the display region. The cover glass is typically adjacent the display region but can also be integrated with the display region, such as another layer (outer protective layer) therefor.

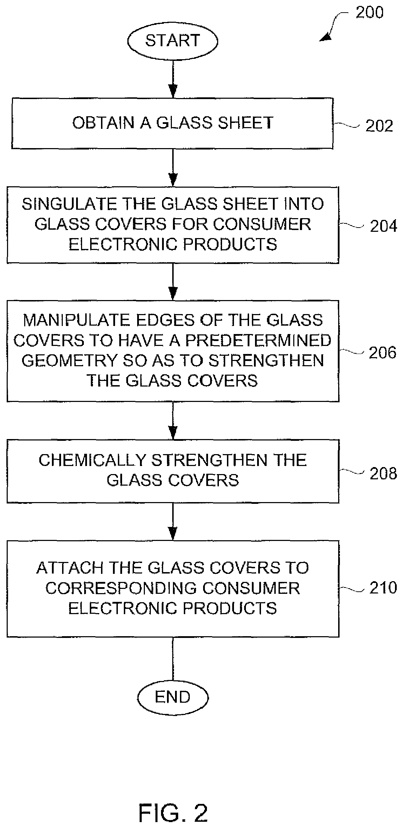

FIG. 2 is a flow diagram of glass cover process 200 according to one embodiment. Glass cover process 200 can, for example, be used to form one or more cover glass pieces. The glass cover pieces can, for example, be used for cover glass 106 illustrated in FIG. 1B.

Glass cover process 200 can initially obtain 202 a glass sheet. The glass sheet is, for example, alumino silicate glass. The glass sheet can then be processed to singulate 204 the glass sheet into individualized glass covers. The glass covers are, for example, used on consumer electronic products, such as electronic device 100 illustrated in FIG. 1B. In one embodiment, the glass sheet is cut (e.g., with a blade, scribe & break, water jet or laser) to singulate 204 the glass sheet into the individualized glass covers. In an alternative embodiment, the glass covers can be individually formed without requiring singulation.

Next, the edges of the individual glass covers can be manipulated 206 to have a predetermined geometry so as to strengthen the glass covers. Manipulation 206 of the edges can cause the edges to take the shape of the predetermined geometry. For example, manipulation 206 can machine, grind, cut, etch, scribe, mold, slump or otherwise form the edges of the glass covers into the predetermined geometry. The edges can also be polished.

Additionally, the individual glass covers can be chemically strengthened 208. In one embodiment, the glass cover can be placed in a chemical bath to allow chemical strengthening to occur. In this type of chemical strengthening, an ion exchange process occurs at the surface of the glass covers which serves to increase compressive stress at the surfaces, including the edges.

Thereafter, the glass covers can be attached 210 to corresponding consumer electronic products. The glass covers can form an outer surface of the corresponding consumer electronic product (e.g., top surface of a housing). Once attached 210, the edges of the glass covers can be exposed. Although the edges of the glass covers can be exposed, the edges can be further protected. As one example, the edges of the glass covers can be recessed (e.g., along one or more axes) from the outer sides of a housing for the consumer electronic product. As another example, the edges of the glass covers can be protected by additional material placed around or adjacent the edges of the cover glasses. The glass covers can be attached 210 in a variety of ways, including adhesive, bonding, or mechanical devices (e.g., snaps, screws, etc.). In some embodiments, the glass covers can also have a display module (e.g., LCM) attached. Following attachment 210 of the glass covers to the consumer electronic products, glass cover process 200 can end.

Although manipulation 206 of the edges of the glass covers can manipulate 206 all of the edges of the glass covers, it should be noted that not all of the edges need to be manipulated 206. In other words, depending on the particular embodiment or design, manipulation 206 can be imposed on only one or more of the edges of the glass covers. For a given edge, all or a portion of the edge can be manipulated into a predetermined geometry. Also, different edges can be manipulated 206 differently (i.e., different edges can have different geometries). Also, some edges can a predetermined geometry while other edges can remain sharp. Over a given edge being manipulated 206, the predetermined geometry can also vary, such as with a complex curve (e.g., s-curve).

Singulation 204 of the glass sheet into individual glass covers can be performed in a manner that reduces microcracks and/or stress concentrations at the edges, thereby increasing overall strength. The singulation technique used can vary and can be dependent on the thickness of the glass sheet. In one embodiment, the glass sheet is singulated using a laser scribe process. In another embodiment, the glass sheet is singulated using a mechanical scribing technique, such as where a mechanical cutting wheel may be used.

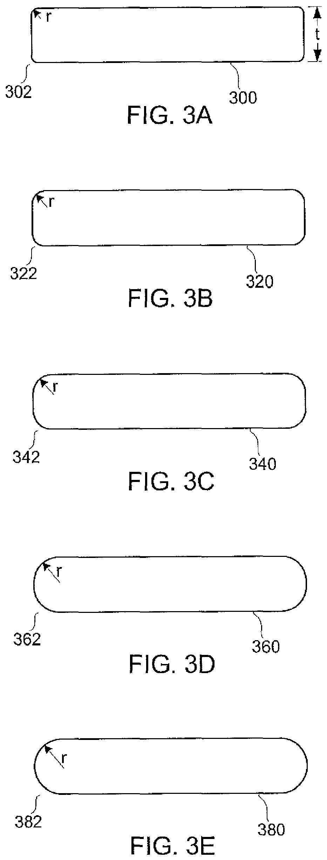

FIGs. 3A-3E are cross-sectional diagrams of glass covers for electronic device housings according to various embodiments. The cross-sectional diagrams illustrate certain predetermined edge geometries that can be used for glass covers to be provided on electronic device housings. It should be appreciated that the edge geometries shown are by way of example, and are not to be construed as being limiting. The width and thickness depicted in FIGS. 3A-3B are not to scale for purposes of illustration.

FIG. 3A illustrates a cross-sectional diagram of glass cover 300 having edge geometry 302. The thickness (t) for the glass cover is about 1.0 millimeter although it should be appreciated that thickness (t) may vary. Edge geometry 302 can have a small edge radius (r) of, for example, about 0.1 millimeters. Here, the edges of the edge geometry 302 are rounded to an edge radius of 10% of the thickness of the cover glass.

FIG. 3B illustrates a cross-sectional diagram of glass cover 320 having edge geometry 322. The thickness (t) for the glass cover is about 1.0 millimeter although it should be appreciated that thickness (t) may vary. Edge geometry 322 can have an edge radius of, for example, about 0.2 millimeters. Here, the edges of the edge geometry 322 are rounded to an edge radius of 20% of the thickness of the cover glass.

FIG. 3C illustrates a cross-sectional diagram of a glass cover 340 having edge geometry 342. The thickness (t) for the glass cover is about 1.0 millimeter although it should be appreciated that thickness (t) may vary. Edge geometry 342 can have a medium edge radius of, for example, about 0.3 millimeters. Here, the edges of the edge geometry 342 are rounded to an edge radius of 30% of the thickness of the cover glass.

FIG. 3D illustrates a cross-sectional diagram of glass cover 360 having edge geometry 362. The thickness (t) for the glass cover is about 1.0 millimeter although it should be appreciated that thickness (t) may vary. Edge geometry 362 can have a large edge radius (r) of, for example, about 0.4 millimeters. Here, the edges of the edge geometry 362 are rounded to an edge radius of 50% of the thickness of the cover glass.

FIG. 3E illustrates a cross-sectional diagram of a glass cover 380 having an edge geometry 382. The thickness (t) for the glass cover is about 1.0 millimeter although it should be appreciated that thickness (t) may vary. The edge geometry 382 can have a full edge radius (r) of, for example, about 0.5 millimeters. Here, the edges of the edge geometry 382 are rounded to an edge radius of 50% of the thickness of the cover glass.

In general, the predetermined edge geometries illustrated in FIGs. 3A-3E serve to round the edges of a glass cover. By eliminating sharp edges on the glass cover, the strength of the glass cover is able to be increased. Specifically, rounding otherwise sharp edges improves strength of the edges, thereby strengthening the edges which would otherwise be weak regions of a glass cover. The edges are able to be strengthened so that compressive stress of the glass cover is generally uniform over its surface, even at the edges. In general, the larger the edge radius, the more uniform the strengthening over the surface of the glass cover, and thus the greater the strength.

Besides the rounding of the edges illustrated in FIGs. 3A-3E, the edges of a glass cover can be machined in ways other than through rounding. As one example, edge geometries can pertain to flattening of the edges. As another example, edge geometries can be complex geometries. One example of a complex geometry is a spline curve. Another example of a complex geometry is an s-curve.

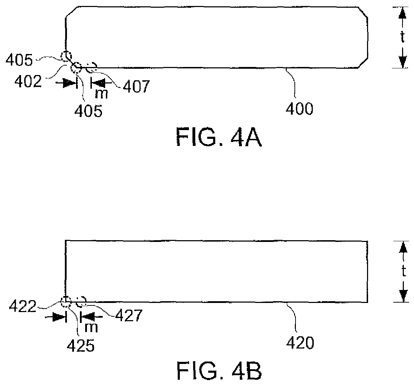

FIG. 4A is a cross-sectional diagram of a glass cover for an electronic device housings according to an additional embodiment that pertains to a chamfered edge geometry. More particularly, FIG. 4A illustrates a cross-sectional diagram of glass cover 400 having edge geometry 402. The thickness (t) for the glass cover is about 1.0 millimeter. Edge geometry 402 has flattened edges. Edge geometry 402 is effectively a chamfered edge. A chamfer is a beveled edge that substantially connects two sides or surfaces. In one embodiment, a chamfered edge may have a depth of between approximately 0.15 millimeters and approximately 0.25 millimeters. By way of example, edge geometry 402 may include an approximately 0.15 millimeter chamfer or an approximately 0.25 millimeter chamfer. By providing the chamfered edge, substantially minimum compressive stresses may occur approximately at locations 405. One location which corresponds to a substantially minimum Van Mises stress location is indicated at a location 407. In one embodiment, location 407 is substantially centered at approximately ten (10) micrometers from a corner associated with edge geometry 402. In other words, moving the minimum compressive stress inward from the edge (e.g., corner), such as by use of edge geometry 402, can render the edge stronger. If the flattened edges are also rounded, such as on the order illustrated in FIGs. 3A-3E, the flattened edges (e.g., locations 405) can be more uniformly chemically strengthened.

FIG. 4B illustrates a cross-sectional diagram of glass cover 420 having reference edge geometry 422 that includes a straight corner (i.e., sharp corner). While this edge geometry does not yield the strength enhancement of the predetermined edge geometries, such as in FIGs. 3A-3E. The thickness (t) for the glass cover is about 1.0 millimeter although it should be appreciated that thickness (t) may vary. Reference edge geometry 422 is a straight corner, e.g., an approximately 90 degree corner. With reference edge geometry 422, an area of substantially minimum compressive stress occurs at location 425. One location which corresponds to a substantially minimum Van Mises stress location is indicated at location 427. In one embodiment, location 427 is substantially centered at approximately ten micrometers from a corner associated with the reference edge geometry 422. In comparing the location of the substantially minimum Van Mises stress location of FIGs. 4A and 4B, location 407 is further from the edge that the location 427.

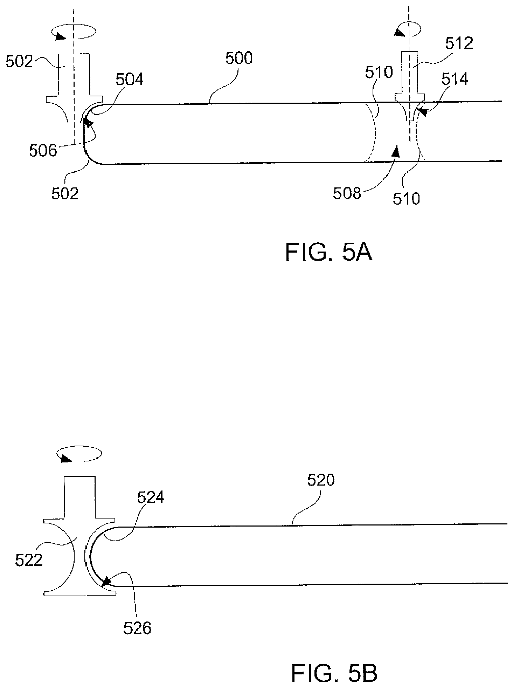

FIG. 5A is a cross-sectional diagram of a glass cover for an electronic device housing 500 being manipulated according to one embodiment. A machining tool 502 can be controlled so as to move around an outer periphery of the electronic device housing 500 to form outer edges 504 with a predetermined edge geometry. The machining tool 502 includes at least one machining surface 506 that is used to manipulate the outer edges 504. For example, the machining surface 506 can grind or cut the outer edges 504 to the predetermined edge geometry.

In FIG. 5A, the electronic device housing 500 can also include an opening 508 such as for a speaker, microphone, button, etc. The opening 508 can also have rounded surfaces 510 that can be shaped by a machining tool 512. The rounded surfaces 510, like the outer edges 504 with the predetermined edge geometry, can provide improved strength. The machining tool 512 includes at least one machining surface 514 that is used to manipulate the rounded surfaces 510. For example, the machining surface 514 can grind or cut the rounded surfaces 510 to provide the desired rounding. The machining tool 512 can be the same as the machining tool 502 or can be a different machining tool.

FIG. 5B is a cross-sectional diagram of a glass cover for an electronic device housing 520 being manipulated according to another embodiment. A machining tool 522 can be controlled so as to move around outer periphery of the electronic device housing 520 to form outer edges 524 with a predetermined edge geometry. The machining tool 522 includes at least one machining surface 526 that is used to manipulate the outer edges 524. The machining surface 526 can grind or cut the outer edges 524 to the predetermined edge geometry.

As previously discussed, glass covers can be used as an outer surface of portions of a housing for electronic devices, *e.g*., handheld electronic devices. A handheld electronic device may, for example, function as a media player, phone, internet browser, email unit or some combination of two or more of such. A handheld electronic device generally includes a housing and a display area. With reference to FIGs. 5A-5D, different handheld electronic devices having cover glass (or glass windows) may be assembled in accordance with embodiments of the invention. By way of example, the handheld electronic devices may correspond to an iPhone™ or iPod™ manufactured by Apple Inc. of Cupertino, CA.

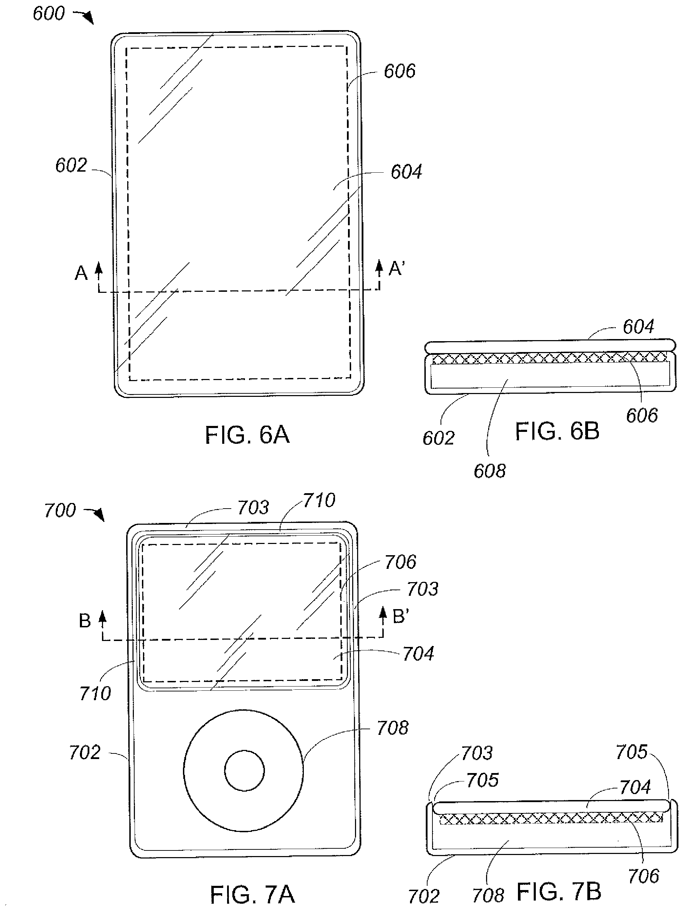

FIGs. 6A and 6B are diagrammatic representations of electronic device 600 according to one embodiment. FIG. 6A illustrates a top view for the electronic device 600, and FIG. 6B illustrates a cross-sectional side view for electronic device 600 with respect to reference line A-A'. Electronic device 600 can include housing 602 that has glass cover window 604 (glass cover) as a top surface. Cover window 604 is primarily transparent so that display assembly 606 is visible through cover window 604. In one embodiment, the cover window 604 can be strengthened using any of the techniques described herein. Display assembly 606 can, for example, be positioned adjacent cover window 604. Housing 602 can also contain internal electrical components besides the display assembly, such as a controller (processor), memory, communications circuitry, etc. Display assembly 606 can, for example, include a LCD module. By way of example, display assembly 606 may include a Liquid Crystal Display (LCD) that includes a Liquid Crystal Module (LCM). In one embodiment, cover window 604 can be integrally formed with the LCM. Housing 602 can also include an opening 608 for containing the internal electrical components to provide electronic device 600 with electronic capabilities. In one embodiment, housing 602 may need not include a bezel for cover window 604. Instead, cover window 604 can extend across the top surface of housing 602 such that the edges of cover window 604 can be aligned (or substantially aligned) with the sides of housing 602. The edges of cover window 604 can remain exposed. Although the edges of cover window 604 can be exposed as shown in FIGs. 6A and 6B, in alternative embodiment, the edges can be further protected. As one example, the edges of cover window 604 can be recessed (horizontally or vertically) from the outer sides of housing 602. As another example, the edges of cover window 604 can be protected by additional material placed around or adjacent the edges of cover window 604.

Cover window 604 may generally be arranged or embodied in a variety of ways. By way of example, cover window 604 may be configured as a protective glass piece that is positioned over an underlying display (e.g., display assembly 606) such as a flat panel display (e.g., LCD) or touch screen display (e.g., LCD and a touch layer). Alternatively, cover window 604 may effectively be integrated with a display, i.e., glass window may be formed as at least a portion of a display. Additionally, cover window 604 may be substantially integrated with a touch sensing device such as a touch layer associated with a touch screen. In some cases, cover window 604 can serve as the outer most layer of the display.

FIGs. 7A and 7B are diagrammatic representations of electronic device 700 according to another embodiment of the invention. FIG. 7A illustrates a top view for electronic device 700, and FIG. 7B illustrates a cross-sectional side view for electronic device 700 with respect to reference line B-B'. Electronic device 700 can include housing 702 that has glass cover window 704 (glass cover) as a top surface. In this embodiment, cover window 704 can be protected by side surfaces 703 of housing 702. Here, cover window 704 does not fully extend across the top surface of housing 702; however, the top surface of side surfaces 703 can be adjacent to and aligned vertically with the outer surface of cover window 704. Since the edges of cover window 704 can be rounded for enhanced strength, there may be gaps 705 that are present between side surfaces 703 and the peripheral edges of cover window 704. Gaps 705 are typically very small given that the thickness of cover window 704 is thin (e.g., less than 3 mm). However, if desired, gaps 705 can be filled by a material. The material can be plastic, rubber, metal, etc. The material can conform in gap 705 to render the entire front surface of electronic device 700 flush, even across gaps 705 proximate the peripheral edges of cover window 704. The material filling gaps 705 can be compliant. The material placed in gaps 705 can implement a gasket. By filling the gaps 705, otherwise probably undesired gaps in the housing 702 can be filled or sealed to prevent contamination (e.g., dirt, water) forming in the gaps 705. Although side surfaces 703 can be integral with housing 702, side surface 703 could alternatively be separate from housing 702 and, for example, operate as a bezel for cover window 704.

Cover window 704 is primarily transparent so that display assembly 706 is visible through cover window 704. Display assembly 706 can, for example, be positioned adjacent cover window 704. Housing 702 can also contain internal electrical components besides the display assembly, such as a controller (processor), memory, communications circuitry, etc. Display assembly 706 can, for example, include a LCD module. By way of example, display assembly 706 may include a Liquid Crystal Display (LCD) that includes a Liquid Crystal Module (LCM). In one embodiment, cover window 704 is integrally formed with the LCM. Housing 702 can also include an opening 708 for containing the internal electrical components to provide electronic device 700 with electronic capabilities.

The front surface of electronic device 700 can also include user interface control 708 (e.g., click wheel control). In this embodiment, cover window 704 does not cover the entire front surface of electronic device 700. Electronic device 700 essentially includes a partial display area that covers a portion of the front surface.

Cover window 704 may generally be arranged or embodied in a variety of ways. By way of example, cover window 704 may be configured as a protective glass piece that is positioned over an underlying display (e.g., display assembly 706) such as a flat panel display (e.g., LCD) or touch screen display (e.g., LCD and a touch layer). Alternatively, cover window 704 may effectively be integrated with a display, *i.e.*, glass window may be formed as at least a portion of a display. Additionally, cover window 704 may be substantially integrated with a touch sensing device such as a touch layer associated with a touch screen. In some cases, cover window 704 can serve as the outer most layer of the display.

As noted above, the electronic device can be a handheld electronic device or a portable electronic device. The invention can serve to enable a glass cover to be not only thin but also adequately strong. Since handheld electronic devices and portable electronic devices are mobile, they are potentially subjected to various different impact events and stresses that stationary devices are not subjected to. As such, the invention is well suited for implementation of glass surfaces for handheld electronic device or a portable electronic device that are designed to be thin.

The strengthened glass, e.g., glass covers or cover windows, is particularly useful for thin glass applications. For example, the thickness of a glass cover being strengthen can be between about 0.5 - 2.5 mm. In other embodiments, the strengthening is suitable for glass products whose thickness is less than about 2 mm, or even thinner than about 1 mm, or still even thinner than about 0.6 mm.

The techniques for strengthening glass, e.g., glass covers or cover windows, are particularly useful for edges of glass that are rounded by a predetermined edge geometry having a predetermined edge radius (or predetermined curvature) of at least 10% of the thickness applied to the corners of the edges of the glass. In other embodiments, the predetermined edge radius can be between 20% to 50% of the thickness of the glass. A predetermined edge radius of 50% can also be considered a continuous curvature (or fully rounded), one example of which is illustrated in FIG. 3E. Alternatively, the strengthened glass, e.g., glass covers or cover windows, can be characterized such that, following the strengthening, the glass has a strength that is substantially uniform across the surface of the glass, including the edges. For example, in one embodiment, the strength reduction at the edges of the glass is no more than 10% lower than the strength of the glass at other non-edge portions. As another example, in another embodiment, the strength reduction at the edges of the glass is no more than 5% lower than the strength of the glass at other non-edge portions.

In one embodiment, the size of the glass cover depends on the size of the associated electronic device. For example, with handheld electronic devices, the size of the glass cover is often not more than five (5) inches (about 12.7 cm) diagonal. As another example, for portable electronic devices, such as smaller portable computers or tablet computers, the size of the glass cover is often between four (4) (about 10.2 cm) to twelve (12) inches (about 30.5 cm) diagonal. As still another example, for portable electronic devices, such as full size portable computers, displays or monitors, the size of the glass cover is often between ten (10) (about 25.4 cm) to twenty (20) inches (about 50.8 cm) diagonal or even larger.

However, it should be appreciated that in some cases with larger screen sizes, the thickness of the glass layers may need to be greater. The thickness of the glass layers may need to be increased to maintain planarity of the larger glass layers. While the displays can still remain relatively thin, the minimum thickness may increase with increasing screen size. For example, the minimum thickness of the glass cover can correspond to about 0.4 mm for small handheld electronic devices, about 0.6 mm for smaller portable computers or tablet computers, about 1.0 mm or more for full size portable computers, displays or monitors, again depending on the size of the screen. The thickness of the glass cover can, however, depend on the application, structure and/or the size of an electronic device.

As discussed above, glass cover or, more generally, a glass piece may be chemically treated such that surfaces of the glass are effectively strengthened (e.g., strengthened in a more uniform manner). Through such strengthening, glass pieces can be made stronger so that thinner glass pieces can be used with consumer electronic device. Thinner glass with sufficient strength allows for consumer electronic device to become thinner.

A glass cover or, more generally, a glass piece may be chemically treated such that surfaces, including edges, of the glass are effectively strengthened. For example, in a single exchange process, some Na⁺ ions near the surface regions of the glass piece may be replaced by Alkali metal ions (e.g., K⁺ ions) to strengthen the surface regions. When Alkali metal ions, which are typically larger than Na⁺ ions, replace Na⁺ ions, a compressive layer is effectively generated near the surface and, hence, the edges of a glass cover. Thus, the glass cover is essentially made stronger at the surface. In a double exchange process, once the Alkali metal ions replace certain of the Na⁺ ions, the Alkali metal ions (e.g., K⁺ ions) closest to the outside surfaces of the glass piece, e.g., the top surface regions, may be replaced by Na⁺ ions in order to remove some compression stresses from near the top surface regions, while underlying Alkali metal ions previously exchanged into the glass piece may remain in the lower surface regions.

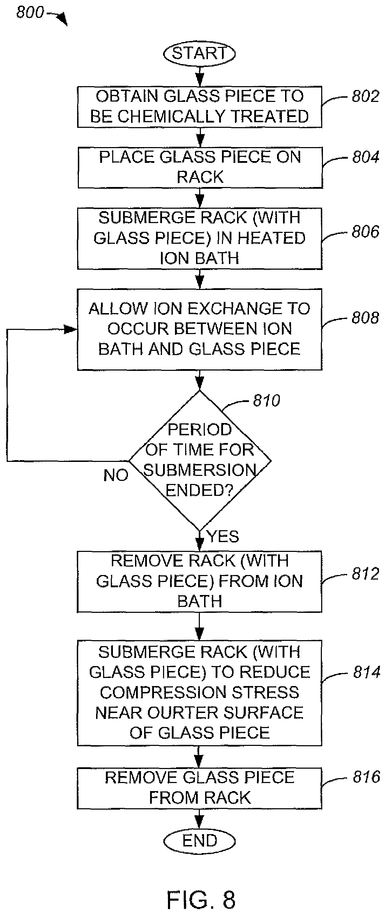

FIG. 8 illustrates a process 800 of chemically treating surfaces of a glass piece in accordance with one embodiment. The process 800 of chemically treating surfaces, e.g., edges, of a glass piece can begin at step 802 in which the glass piece is obtained. The glass piece may be obtained, in one embodiment, after a glass sheet is singulated into glass pieces, e.g., glass covers, and the edges of the glass pieces are manipulated to have a predetermined geometry. It should be appreciated, however, that a glass piece that is to be chemically treated may be obtained from any suitable source.

In step 804, the glass piece can be placed on a rack. The rack is typically configured to support the glass piece, as well as other glass pieces, during chemical treatment. Once the glass piece is placed on the rack, the rack can be submerged in a heated ion bath in step 806. The heated ion bath may generally be a bath which includes a concentration of ions (e.g., Alkali metal ions, such as Lithium, Cesium or Potassium). It should be appreciated that the concentration of ions in the bath may vary, as varying the concentration of ions allows compression stresses on surfaces of the glass to be controlled. The heated ion bath may be heated to any suitable temperature to facilitate ion exchange. By way of example, the heated ion bath may be heated to between approximately 370 degrees Celsius and approximately 430 degrees Celsius.

After the rack is submerged in the heated ion bath, an ion exchange is allowed to occur in step 808 between the ion bath and the glass piece held on the rack. A diffusion exchange occurs between the glass piece, which generally includes Na⁺ ions, and the ion bath. During the diffusion exchange, Alkali metal ions, which are larger than Na⁺ ions, effectively replace the Na⁺ ions in the glass piece. In general, the Na⁺ ions near surface areas of the glass piece may be replaced by the Alkali ions, while Na⁺ ions are essentially not replaced by Alkali ions in portions of the glass which are not surface areas. As a result of the Alkali ions replacing Na⁺ ions in the glass piece, a compressive layer is effectively generated near the surface of the glass piece. The Na⁺ ions which have been displaced from the glass piece by the Alkali metal ions become a part of the ion solution.

A determination can be made in step 810 as to whether a period of time for submerging the rack in the heated ion bath has ended. It should be appreciated that the amount of time that a rack is to be submerged may vary widely depending on implementation. For example, the amount of time may depend upon whether the submersion of the rack and, hence, the glass piece in the heated ion bath is associated with a single exchange process or a double exchange process. If the submersion of the rack in the heated ion bath is part of a single exchange process, then the period of time for submerging the rack in the potassium bath may be approximately four (4) hours or more. Alternatively, if the submersion of the rack in the heated ion bath is part of a double exchange process, then the period of time for submerging the rack in the potassium bath may be less than approximately six (6) hours. Typically, the longer a rack is submerged, i.e., the higher the exchange time for Alkali metal ions and Na⁺ ions, the deeper the depth of the chemically strengthened layer. For example, with thickness of the glass sheet being on the order of 1 mm, the chemical processing (i.e., ion exchange) provided in the ion bath can be provide into the surfaces of the glass pieces 10 micrometers or more. For example, if the glass pieces are formed from soda lime glass, the depth of the compression layer due to the ion exchange can be about 10 microns. As another example, if the glass pieces are formed from alumino silicate glass, the depth of the compression layer due to the ion exchange can range from about 50 microns to 100 microns.

If the determination in step 810 is that the period of time for submerging the rack in the heated ion bath has not ended, then process 800 flow can return to step 817 in which the chemical reaction is allowed to continue to occur between the ion bath and the glass piece. Alternatively, if it is determined that the period of time for submersion has ended, then the rack can be removed from the ion bath in step 812.

As previously mentioned, a chemical strengthening process maybe a single exchange process or a double exchange process. If the chemical strengthening process is a double exchange process, then the chemically strengthened layer of the glass piece may be chemically treated to effectively remove some or all Alkali metal ions (e.g., K⁺ ions) from near the surface of the chemically strengthened layer, while enabling other Alkali metal ions (e.g., K⁺ ions) to remain substantially beneath the surface of the chemically strengthened layer. A double exchange process may generally increase the reliability of the glass piece.

If the chemical strengthening process is a double exchange process, then process 800 moves from step 812 to optional step 814 in which the rack is submerged in a sodium bath for a predetermined amount of time in order to reduce compression stresses near surface of the glass piece or, more specifically, near the surface of the chemically strengthened layer of the glass piece. The sodium bath may be a sodium nitrate (NaNO₃) bath. The Na⁺ ions in the sodium bath may replace, via diffusion, at least some of the Alkali metal ions (e.g., K⁺ ions) near the surface of the chemically strengthened layer of the glass piece. In one embodiment, the sodium bath is a second heated bath that can operate to back-exchange a portion of the previously exchanged Alkali metal ions with sodium ions. That is, Na⁺ ions diffuse into the glass piece, while only a portion of the Alkali metal ions previously diffused into the glass piece diffuse out.

The amount of time the rack and, hence, the glass piece remains submerged in the sodium bath may vary depending, for example, on the depth to which Na⁺ ions are to replace Alkali metal ions (e.g., K⁺ ions) in the chemically strengthened layer of the glass piece. The amount of time the rack remains submerged in the glass piece may be dependent upon the amount of time the rack was previously submerged in the heated ion bath (e.g., potassium bath). For instance, a total amount of time the rack is submerged in the heated ion bath (e.g., potassium bath) and the sodium bath may be approximately 3 - 25 hours. By way of example, the rack may be submerged in the heated ion bath for approximately 5.75 hours while the rack may be submerged in the sodium bath for approximately 0.25 hours. In general, the or the rack may be submerged in the heated ion bath for approximately 4 - 20 hours, while the rack may be submerged in the sodium bath for up to approximately two hours.

Upon removing the rack from the sodium bath, the glass piece may be removed from the rack in step 816, and the process 800 of chemically treating surfaces of a glass piece can be completed. It should be understood that for a single exchange process, process flow may move directly from step 812 in which the rack is removed from the heated ion bath to step 816 in which the glass piece is removed from the rack.

In any case, after the glass piece is removed from the rack in step 816, and the process 800 of chemically treating surfaces of a glass piece can be completed. However, if desired, the glass piece can be polished. Polishing can, for example, remove any haze or residue on the glass piece following the chemical treatment.

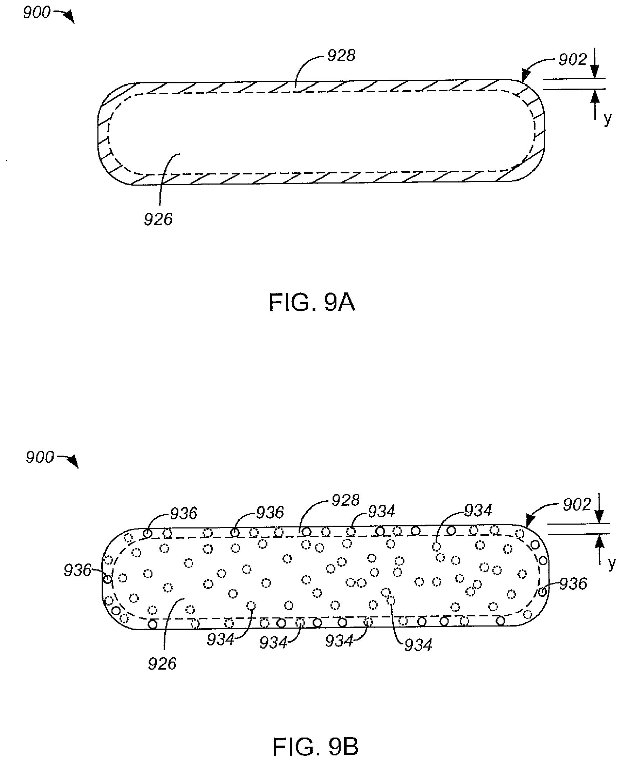

A glass cover which has undergone a chemical strengthening process generally includes a chemically strengthened layer, as previously mentioned. FIG. 9A is a cross-sectional diagram of a glass cover which has been chemically treated such that a chemically strengthened layer is created according to one embodiment. A glass cover 900 includes a chemically strengthened layer 928 and a non-chemically strengthened portion 926. Although the glass cover 900 is, in one embodiment, subjected to chemical strengthening as a whole, the outer surfaces receive the strengthening. The effect of the strengthening is that the non-chemically strengthened portion 926 is in tension, while the chemically strengthened layer 928 is in compression. While glass cover 900 is shown as having a rounded edge geometry 902, it should be appreciated that glass cover 900 may generally have any edge geometry such as those selected to increase the strength of the edges of glass cover 900. Rounded edge geometry 902 is depicted by way of example, and not for purposes of limitation.

Chemically strengthened layer 928 has a thickness (y) which may vary depending upon the requirements of a particular system in which glass cover 900 is to be utilized. Non-chemically strengthened portion 926 generally includes Na⁺ ions 934 but no Alkali metal ions 936. A chemical strengthening process causes chemically strengthened layer 928 to be formed such that chemically strengthened layer 928 includes both Na⁺ ions 934 and Alkali metal ions 936. In one embodiment, chemically strengthened layer 928 may be such that an outer portion of chemically strengthened layer 928 includes substantially more Na⁺ ions 934 than an underlying portion of chemically strengthened layer 928 which includes both Na⁺ ions 934 and Alkali metal ions 936

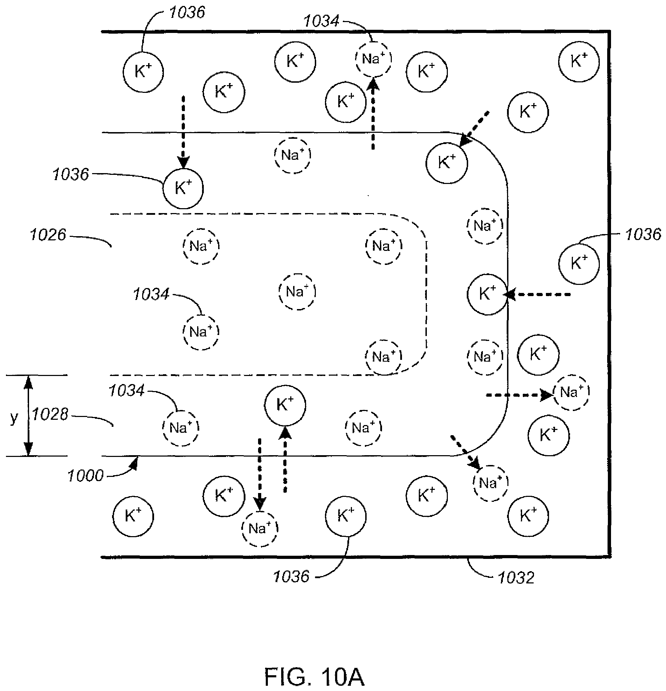

FIG. 10A is a diagrammatic representation of a chemical treatment process that involves submerging a glass cover in an ion bath according to one embodiment. When glass cover 1000, which is partially shown in cross-section, is submerged or soaked in a heated ion bath 1032, diffusion occurs. As shown, Alkali metal ions 1034 which are present in glass cover 1000 diffuse into ion bath 1032 while Alkali metal ions 1036 (e.g., potassium (K⁺)) in ion bath 1032 diffuse into glass cover 1000, such that a chemically strengthened layer 1028 is formed. In other words, Alkali metal ions 1036 from ion bath 1032 can be exchanged with Na⁺ ions 1034 to form chemically strengthened layer 1028. Alkali metal ions 1036 typically would not diffuse into a center portion 1026 of glass cover 1000. By controlling the duration (i.e., time) of a chemical strengthening treatment, temperature and/or the concentration of Alkali metal ions 1036 in ion bath 1032, the thickness (y), or depth of layer, of chemically strengthened layer 1028 may be substantially controlled.

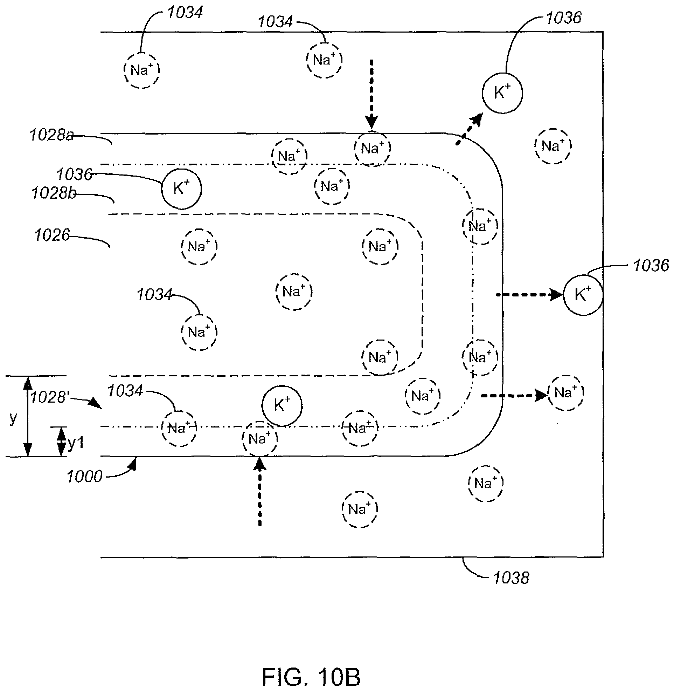

As discussed above, in one embodiment, glass cover 1000 may further be treated to substantially remove Alkali metal ions (e.g., K⁺ ions) 1036 located near an outer surface of chemically strengthened layer 1028. A sodium bath may be used to facilitate the removal of such Alkali metal ions (e.g., K⁺ ions) 1036. FIG. 10B is a diagrammatic representation of a chemical treatment process that involves submerging a glass cover in a sodium bath after the glass cover has previously been submerged in a Alkali metal bath according to one embodiment. Glass cover 1000, which was previously submerged in an heated ion bath (e.g., potassium bath) as described above with respect to FIG. 10A, may be submerged in a sodium bath 1038 such that a chemically strengthened layer 1028' may include an outer layer 1028a which includes little or no Alkali metal ions 1036 and substantially only Na⁺ ions 1034, and an inner layer 1028b which includes both Na⁺ ions 1034 and Alkali metal ions (e.g., K⁺ ions) 1036. When glass cover 1000 is submerged in sodium bath 1038, Na⁺ ions 1034 can displace Alkali metal ions (e.g., K⁺ ions) 1036 from outer layer 1028a, while Alkali metal ions (e.g., K⁺ ions) 1036 remain in inner layer 1028b. Thus, inner layer 1028b, which includes Alkali metal ions (e.g., K⁺ ions) 1036 and Na⁺ ions 1034, is effectively positioned between outer layer 1028a and a non-chemically strengthened portion 1026. The non-chemically strengthened portion 1026 typically has no Alkali metal ions (e.g., K⁺ ions) 1036, and the outer layer 1028a has reduced levels of Alkali metal ions (e.g., K⁺ ions) 1036 as compared to the inner layer 1028b. It may be that the outer layer 1028a has little or none of the Alkali metal ions (e.g., K⁺ ions) 1036. Displaced Alkali metal ions (e.g., K⁺ ions) 1036 may effectively diffuse from outer layer 1028b into sodium bath 1038.

Chemically strengthened layer 1028' may have a thickness (y), while outer layer 1028a may have a thickness (y1). The thickness (y1) may be substantially controlled by the concentration of Na⁺ ions 1034 in sodium bath 1038, as well as by the amount of time glass cover 1000 is submerged in sodium bath 1038.

The concentration of Alkali metal ions (e.g., K⁺ ions) in a heated ion bath (e.g., potassium bath) may be varied while a glass cover is soaking in the heated ion bath. In other words, the concentration of Alkali metal ions (e.g., K⁺ ions) in a potassium bath may be maintained substantially constant, may be increased, and/or may be decreased while a glass cover is submerged in the heated ion bath. For example, as Alkali metal ions displace Na⁺ ions in the glass, the Na⁺ ions become part of the heated ion bath. Hence, the concentration of Alkali metal ions in the heated ion bath may change unless additional Alkali metal ions are added into the heated ion bath.

Varying the concentration of K⁺ ions in a potassium bath and/or varying the soaking time of a glass cover in the potassium bath may enable the tension at approximately the center of the glass cover to be controlled. In one embodiment, a glass cover can be placed in a heated ion bath for approximately 10 -15 hours, where the heated ion bath is, for example, a potassium bath with a K⁺ ion concentration that is between approximately forty percent (40%) and approximately ninety-eight percent (98%).

The parameters associated with an Alkali metal bath and/or a sodium bath may generally vary widely. The concentration of Alkali metal (e.g., potassium) in an Alkali metal bath may vary, as previously mentioned. Similarly, the concentration of sodium in a sodium bath used in a double exchange process may also vary. Additionally, the temperature to which the baths are heated, as well as the length of time glass covers are submerged in the baths may also vary widely. The temperature is not limited to being between approximately 370 degrees Celsius and approximately 430 degrees Celsius. By way of example, a total time a glass cover is submerged in an Alkali metal bath may be approximately ten (10) hours. Further, a total time a glass cover is submerged in an Alkali metal bath and a sodium bath during a double exchange process may be approximately ten hours (10), e.g., where the glass cover is submerged in the Alkali metal bath for approximately 6.7 hours and in the sodium bath for approximately 3.3 hours. The length of time being submerged (e.g., soaked) in either of the baths can vary depending on the concentrations.

The concentration of Alkali metal ions in an ion bath may be varied while a glass cover is soaking in the ion bath. In other words, the concentration of Alkali metal ions in an ion bath may be maintained substantially constant, may be increased, and/or may be decreased while a glass cover is submerged in the ion bath without departing from the spirit or the scope of the present invention. For example, as Alkali metal ions displace Na⁺ ions in the glass, the Na⁺ ions become part of the ion bath. Hence, the concentration of Alkali metal ions in the ion bath may change unless additional Alkali metal ions are added into the ion bath.

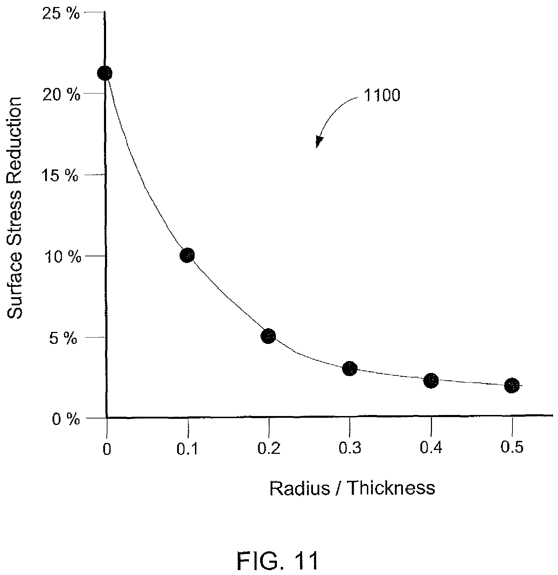

FIG. 11 is an illustration of an exemplary graphical plot 1100 of stress reduction at surface of glass according to one embodiment. Here, the glass has edges of a certain geometry and the glass is chemically treated to improve its strength (i.e., chemically strengthened). The graphical plot 1100 references surface stress reduction on a vertical axis and radius/thickness (R/T) on a horizontal axis. In this example, the depth of layer (DOL) for the chemical strengthening is 55 micrometers on a thickness of about 1 mm for the glass. The graphical plot 1100 represents empirical data for compressive stress reduction for a plurality of different edge radii. The larger the edge radii the stronger the glass is at the edges. In other words, the sharper the edges are, the greater the reduction of compressive stress at the edges. That is, chemical strengthening is significantly less effective at edges that are sharp. Hence, by rounding the edges, the chemically strengthening becomes consistently more effective across the surface of the glass, including the edges.

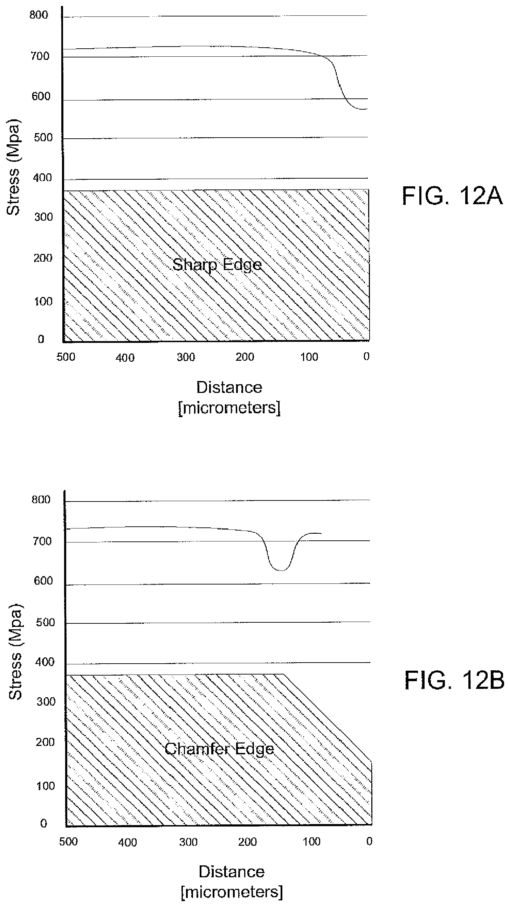

Compressive stress at the edges of glass member desirable since it makes the glass member stronger. FIGs. 12A-12D illustrate exemplary diagrams of compressive stress profiles for glass members proximate to an edge. These diagrams indicate that different edge profiles (also illustrated in FIGs. 12A-12D) can be used to alter compressive stress at edge regions.

FIG. 12A is a graphical representation of compressive stress verses distance for a sharp edge profile (e.g., sharp or square edge) according to one embodiment. The compressive stress depicted is for a top surface of a glass member at a corner. The distance depicted in FIG. 12A is the distance inward from the corner. The compressive stress is at a minimum at the corner of the glass member. The compressive stress reduction at the corner is about 22%.

FIG. 12B is a graphical representation of compressive stress verses distance for a chamfered edge profile (e.g., chamfered edge) according to one embodiment. The compressive stress depicted is for a top surface of a glass member at a corner that has been chamfered inward 0.15 mm from the corner. The distance depicted in FIG. 12B is the distance inward from the side. The compressive stress is at a minimum at the corners of the chamfer. The compressive stress reduction at the corners of the chamfer is about 16%, which is about a distance of 15 mm inward from the side.

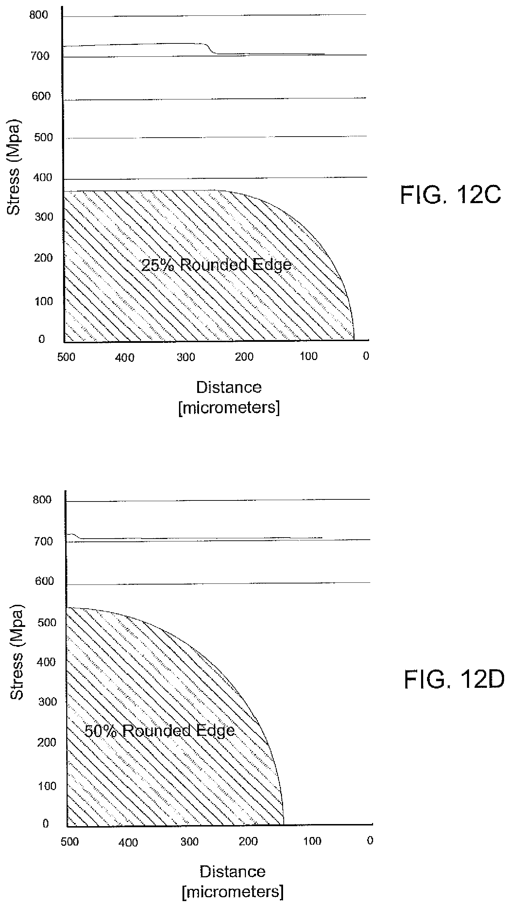

FIG. 12C is a graphical representation of compressive stress verses distance for a rounded edge profile (e.g., rounded edge) according to one embodiment. The compressive stress depicted is for a top surface of a glass member at a corner that has been rounded with an edge radius (r) that is about 25% of the thickness (t) of the glass member. The distance depicted in FIG. 12C is the distance inward from the side. The compressive stress is at a minimum inward from the corner at the transition from the rounded corner and the corresponding side. The compressive stress reduction at the transition is about 4%.

FIG. 12D is a graphical representation of compressive stress verses distance for a rounded edge profile (e.g., rounded edge) according to one embodiment. The compressive stress depicted is for a top surface of a glass member at a corner that has been rounded with an edge radius (r) that is about 50% of the thickness (t) of the glass member. The distance depicted in FIG. 12D is the distance inward from the side. The compressive stress is at a minimum inward from the corner at the transition from the rounded corner and the corresponding side. The compressive stress reduction at the transition is about 2%.

The amount of compressive stress reduction amounts for the rounded edges illustrated in FIGs. 12C and 12D are significantly lowered than for the square edge in FIG. 12A or the chamfered edge in FIG. 12B. However, the chamfered edge in FIG. 12B is an improvement over the square edge in FIG. 12A. In addition, the compressive strength at the rounded edges (FIGs. 12C and 12D) is higher than the compressive stress at the square (FIGs. 12A) or chamfered edges (FIG. 12B). Thus, by using rounded edges on a glass member, the compressive stress reduction at the edges is significantly reduced which yields an overall improvement in strength of the glass member. It should also be noted that with rounded edges, the compressive stress profile for a surface of a glass member is significantly more uniform across the surface of the glass member (see FIGs. 12C and 12D).

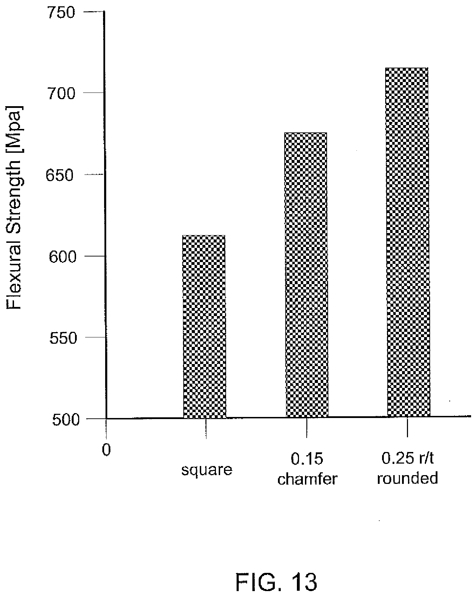

Strength (or overall strength) of a glass member can be a flexural strength that can be measured. For example, a four-point bending test can be performed in accordance with ASTM Standard C158-02: Standard Test Methods for Strength of Glass by Flexure. FIG. 13 illustrates an exemplary diagram of flexural strength for glass members having different edge profiles. These edge profiles are the same as the exemplary profiles provided in FIGs. 12A-12C. This diagram indicates that different edge profiles also affect flexure strength in a same manner as compressive stress. Namely, following chemical strengthening, the rounded edges (e.g., FIG. 12C) have greater flexure strength than square (FIGs. 12A) or chamfered edges (FIG. 12B), assuming similar flaw size distribution.

It should also be noted that different edge profiles can yield different flaws at different depths from the edge when being formed. Most flaws appear at transitions, such as between curved radius and a straight surface. The edge profiles that are formed or processed to have a cleaner edge finish (or less surface roughness), e.g., with polishing, can yield smaller flaws.

The techniques described herein can make edges of glass substantially stronger, which can be of particular importance as the glass gets thinner. The predetermined geometry with the rounded edges can, for example, yield edges of glass substantially stronger. With the predetermined geometry at the edges having been provided with significant edge radius (e.g., at least 20% of its thickness), the chemical strengthening that is provided can be more uniform such that the edges are able to be strengthened as other surfaces of the glass. As an example, with use of the predetermined geometry having the rounded edges shown in FIG. 3E the strengthening provided herein can, for example, yield edges of glass that are substantially stronger. For example, the strength improvement for glass having the predetermined geometry at the edges provided with full rounding (e.g., FIG. 3E) can be on the order of 20% stronger than edges having significantly no rounding, that is, sharp edges (e.g., FIG. 4B).

The techniques describe herein may be applied to glass surfaces used by any of a variety of electronic devices including but not limited handheld electronic devices, portable electronic devices and substantially stationary electronic devices. Examples of these include any known consumer electronic device that includes a display. By way of example, and not by way of limitation, the electronic device may correspond to media players, mobile phones (e.g., cellular phones), PDAs, remote controls, notebooks, tablet PCs, monitors, all in one computers and the like.

This also references: (i) U.S. Provisional Patent Application No. 61/247,493, filed September 30, 2009 and entitled "Techniques for Strengthening Glass Covers for Portable Electronic Devices", which hereby incorporated herein by reference in its entirety; (ii) U.S. Patent Application No. 12/193,001, filed August 16, 2008, entitled "METHODS AND SYSTEMS FOR STRENGTHENING LCD MODULES", which is hereby incorporated by reference herein; and (iii) U.S. Patent Application No. 12/172,073, filed July 11, 2008, entitled "METHODS AND SYSTEMS FOR INTEGRALLY TRAPPING A GLASS INSERT IN A METAL BEZEL", which is hereby incorporated by reference herein.

The various aspects, features, embodiments or implementations of the invention described above can be used alone or in various combinations.

Although only a few embodiments of the present invention have been described, it should be understood that the present invention may be embodied in many other specific forms without departing from the spirit or the scope of the present invention. By way of example, the steps associated with the methods of the present invention may vary widely. Steps may be added, removed, altered, combined, and reordered without departing from the spirit of the scope of the invention. Similarly, while operations are depicted in the drawings in a particular order, this should not be understood as requiring that such operations be performed in the particular order shown or in sequential order, or that all illustrated operations be performed, to achieve desirable results.

While this specification contains many specifics, these should not be construed as limitations on the scope of the disclosure or of what may be claimed, but rather as descriptions of features specific to particular embodiment of the disclosure. Certain features that are described in the context of separate embodiments can also be implemented in combination. Conversely, various features that are described in the context of a single embodiment can also be implemented in multiple embodiments separately or in any suitable subcombination. Moreover, although features may be described above as acting in certain combinations, one or more features from a claimed combination can in some cases be excised from the combination, and the claimed combination may be directed to a subcombination or variation of a subcombination.

While this invention has been described in terms of several embodiments, there are alterations, permutations, and equivalents, which fall within the scope of this invention. It should also be noted that there are many alternative ways of implementing the methods and apparatuses of the present invention. It is therefore intended that the following appended claims be interpreted as including all such alterations, permutations, and equivalents as fall within the true spirit and scope of the present invention.

Further embodiments of the invention are set out in the below numbered clauses.
Clause 1. A method for producing a cover for an exposed surface of a consumer electronic product, the method comprising: obtaining a glass cover for the exposed surface of the consumer electronic product; and chemically strengthening the glass cover using a series of ion exchange stages.
Clause 2. A method as recited in clauses 1 or 2, wherein the chemical strengthening forms a sub-surface compressive maximum slightly inward from the edges of the glass cover.
Clause 3. A method as recited in clause 2, wherein said chemically strengthening of the glass cover comprises: placing the glass cover in a first heated solution for a first period of time to allow at least one component of the first heated solution to diffuse into the glass cover.
Clause 4. A method as recited in clause 3, wherein the first heated solution comprises Alkali metal ions.
Clause 5. A method as recited in clause 3, wherein the first heated solution is a potassium nitrate solution (KNO3).
Clause 6. A method as recited in clause 3, wherein the heated solution comprises potassium.
Clause 7. A method as recited in clause 3, wherein the at least one component is potassium ions.
Clause 8. A method as recited in clause 3, wherein the at least one component is Alkali metal ions
Clause 9. A method as recited in clause 3, wherein the chemically strengthening of the glass cover further comprises: placing the glass cover in a second heated solution for a second period of time to allow at least one component of the second heated solution to diffuse into the glass cover.
Clause 10. A method as recited in clause 9, wherein the at least one component is sodium ions.
Clause 11. A method as recited in clause 9, wherein the second period of time is less than or equal to 50% of the first period of time.
Clause 12. A method as recited in any of clauses 1 - 11, wherein the series of ion exchange stages include a forward ion exchange stage, and a back ion exchange stage.
Clause 13. A method as recited in clause 12, wherein the forward ion exchange stage serves to exchange Alkali metal ions into the glass cover, and the back ion exchange serves to exchange Alkali metal ions from the glass cover.
Clause 14. A method for producing a glass cover for an exposed surface of a consumer electronic product, the method comprising: obtaining a glass sheet; singulating the glass sheet into a plurality of glass covers, each of the glass covers being suitably sized to be provided on the exposed surface of a consumer electronic product; and chemically strengthening the glass covers by (i) placing the glass covers in a first heated solution for a first period of time to allow at least one component of the first heated solution to diffuse into the glass covers, and (ii) placing the glass covers in a second heated solution for a second period of time after removing the glass covers from the first heated solution.
Clause 15. The method as recited in clause 14, wherein the first heated solution includes at least one Alkali metal, and the second heated solution includes at least sodium.
Clause 16. A method as recited in clause 14, wherein the method further comprises: thereafter attaching each of the glass covers to a corresponding consumer electronic product.
Clause 17. A method as recited in clause 16, wherein, after the glass cover is attached to the corresponding consumer electronic product, at least one of the edges of the glass cover remains exposed.
Clause 18. A method as recited in clause 16, the method does not couple a border or bezel around the at least one of the edges of the cover glass.
Clause 19. A method as recited in clause 16, wherein, after the glass cover is attached to the corresponding consumer electronic product, the edges of the glass cover remains exposed, and wherein the method does not couple a border or bezel around the at least one of the edges of the cover glass.
Clause 20. A method as recited in any of clauses 14 - 19, wherein the first heated solution is heated to a first temperature within range of approximately 370 - 430 degrees Celsius, and wherein the first period of time is between at least approximately 4 hours and at most approximately 25 hours, and wherein the second solution being heated to a second temperature within range of approximately 370 - 430 degrees, and wherein the second period of time is between at least approximately 0.1 hours and at most approximately 2 hours.
Clause 21. A method as recited in any of clauses 14 - 19, wherein the first heated solution is heated to a temperature of approximately 420 degrees Celsius, and wherein the period of time is at least approximately 6 hours.
Clause 22. A method as recited in any of clauses 14 - 19, wherein the method further comprises: manipulating the edges of each of the glass covers to correspond to a predetermined edge geometry prior to the placing the glass covers in the first heated solution, the predetermined edge geometry being selected to strengthen at least the edges of the glass covers.
Clause 23. A method as recited in any of clauses 14 - 19, wherein the predetermined edge geometry has a predetermined curvature applied to the corners of the edges of the glass cover.
Clause 24. A method as recited in any of clauses 14 - 19, wherein the predetermined edge geometry is one selected from the group including a rounded edge geometry.
Clause 25. A consumer electronic product, comprising: a housing having a front surface, a back surface and side surfaces; electrical components provided at least partially internal to the housing, the electrical components including at least a controller, a memory, and a display, the display being provided at or adjacent the front surface of the housing; and a cover glass provided at or over the front surface of the housing such that it is provided over the display, the cover glass being strengthened chemically strengthening using a series of ion exchange stages.
Clause 26. A method as recited in clause 25, wherein the series of ion exchange stages include a forward ion exchange stage, and a back ion exchange stage.
Clause 27. A method as recited in clause 26, wherein the forward ion exchange stage serves to exchange Alkali metal ions into the glass cover, and the back ion exchange serves to exchange Alkali metal ions from the glass cover.
Clause 28. A consumer electronic product as recited in any of clauses 25 - 27, wherein the cover glass extends to across at least a portion of the front surface of the housing to one or more edges between the front surface and one or more of the side surfaces.
Clause 29. A consumer electronic product as recited in any of clauses 25 - 27, wherein edges of the glass cover correspond to a predetermined edge geometry, the predetermined edge geometry being selected to strengthen the edges of the cover glass.
Clause 30. A consumer electronic product as recited in any of clauses 25 - 27, wherein the consumer electronic product is a handheld electronic device.
Clause 31. A consumer electronic product as recited in any of clauses 25 - 27, wherein the thickness of the cover glass is less than 0.6 mm.
Clause 32. A consumer electronic product as recited in any of clauses 25 - 27, wherein the depth of compressive layer resulting from the chemically strengthening of the glass cover is at least 10 microns.

## Claims

1. A consumer electronic product, comprising:
a housing (102);
a display positioned at least partially within the housing (102); and
a cover glass (10) positioned over the display and comprising:
a front surface (16);
a back surface (18) opposite the front surface (16);
a side extending between the front (16) and the back (18) surfaces of the cover glass defining an edge geometry (302) including a rounded transition at an interface between the side and the front surface (16),
wherein;
the cover glass (10) is chemically strengthened by ion exchange; and
following the chemical strengthening, a strength reduction at the edges of the cover glass (10) that is no more than 10% lower than the strength of the cover glass (10) at other non-edge portions.

2. The consumer electronic product as recited in claim 1, wherein the cover glass has a thickness and the rounded transition has a radius of at least 20% of the thickness.

3. The consumer electronic product as recited in claim 1, wherein the rounded transition has a radius of at least 0.1 mm.

4. The consumer electronic product as recited in claim 1, wherein the rounded transition has a radius of at least 0.2 mm.

5. The consumer electronic product as recited in claim 1, wherein the consumer electronic product is a mobile phone, portable media player, notebook computer or tablet computer.

6. The consumer electronic product as recited in claim 1, wherein:
the consumer electronic product is a handheld electronic device; and
the consumer electronic product does not include a bezel for the cover glass at the edge of the cover glass.

7. The consumer electronic product as recited in claim 1, wherein the compressive stress along the entire edge includes a compressive layer having a depth of at least 10 microns.

8. The consumer electronic product as recited in claim 1, wherein the cover glass extends completely across the front surface of the housing.

9. The consumer electronic product as recited in claim 1, wherein the cover glass is alumino-silicate glass.

10. The consumer electronic product as recited in claim 1, wherein the display is at least one of a touch-sensitive display or a liquid crystal display (LCD).

11. A cover glass member suitable for attachment to a housing for a handheld electronic device, the cover glass member being produced and strengthened by a process of:
forming a plurality of cover glass members (10), each of the cover glass members (10) being suitably sized to be provided on an exposed surface of the handheld electronic device, each of the cover glass members including a top surface, a bottom surface opposite the top surface, and sides extending between the top surface and the bottom surface defining an edge geometry;
manipulating each of the cover glass members so that the edge geometry of each cover glass member includes a rounded transition at an interface between a side of the sides and either of the top surface or the bottom surface; and
chemically strengthening each of the cover glass members by ion exchange so that a strength reduction at the edges of the cover glass is no more than 10% lower than the strength of the cover glass at other non-edge portions.

12. The cover glass member as recited in claim 16, wherein a thickness of the cover glass members is less or equal to 1 mm.

13. The cover glass member as recited in claim 16, wherein a thickness of the cover glass members is less or equal to 0.6 mm.

14. The cover glass member as recited in claim 16, a strength reduction at the edges of the cover glass is no more than 5% lower than the strength of the cover glass at other non-edge portions

15. The cover glass member as recited in claim 16, wherein chemically strengthening each of the cover glass members includes replacing at least a plurality of Na⁺ ions in each of the cover glass members with a plurality of K⁺ ions.
